Europäisches Patentamt

European Patent Office

Office européen des brevets

(11) Numéro de publication : **0 320 391 B1**

(12) # FASCICULE DE BREVET EUROPEEN

(45) Date de publication du fascicule du brevet :
**18.03.92 Bulletin 92/12**

(51) Int. Cl.$^5$ : **G01B 11/24**

(21) Numéro de dépôt : **88403124.6**

(22) Date de dépôt : **09.12.88**

(54) **Dispositif de détection vidéo-laser pour la détermination de caractéristiques géométriques d'un objet.**

(30) Priorité : **11.12.87 FR 8717338**

(43) Date de publication de la demande :
**14.06.89 Bulletin 89/24**

(45) Mention de la délivrance du brevet :
**18.03.92 Bulletin 92/12**

(84) Etats contractants désignés :
**AT BE CH DE ES GB IT LI NL SE**

(56) Documents cités :
**WO-A-87/01194**
**US-A- 3 794 427**
**US-A- 4 188 544**
**US-A- 4 343 553**
**US-A- 4 498 778**
**PATENT ABSTRACTS OF JAPAN, vol. 7, no.
260 (P-237)[1405], 18 novembre 1983, page 125
P 237; & JP-A-58 143 204 (KINJI KITADA)
25-08-1983**

(56) Documents cités :
**PATENT ABSTRACTS OF JAPAN, vol. 6, no.
262 (P-164)[1140], 21 décembre 1982, page 31
P 164; & JP-A-57 156 507 (MITSUBISHI DENKI
K.K.) 27-09-1982**
**PATENT ABSTRACTS OF JAPAN, vol. 10, no.
324 (P-512)[2380], 5 novembre 1986, page 1 P
512; & JP-A-61 130 808 (HITACHI LTD) 18-
06-1986**

(73) Titulaire : **CENTRE TECHNIQUE DU BOIS ET
DE L'AMEUBLEMENT**
**10 avenue Saint-Mandé**
**F-75012 Paris (FR)**

(72) Inventeur : **Delahaye, Patrick P.**
**6 Allée Gustave Charpentier**
**F-54700 Pont à Mousson (FR)**

(74) Mandataire : **Thévenet, Jean-Bruno et al
Cabinet BEAU DE LOMENIE 55 rue
d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 320 391 B1

Jouve, 18, rue Saint-Denis, 75001 PARIS

## Description

La présente invention a pour objet un dispositif de détection vidéo-laser pour la détermination en temps réel de caractéristiques géométriques et dimensionnelles d'une pièce à analyser en vue de déterminer son profil, comprenant des moyens de support, sur un plan de base, de la pièce à analyser, des moyens de transport de la pièce à analyser selon une direction prédéterminée, au moins une source laser pour diriger vers la pièce à analyser un faisceau de lumière selon un plan d'illumination dont l'intersection avec le plan de base est perpendiculaire à ladite direction prédéterminée, au moins une caméra vidéo matricielle dont le champ correspond audit plan d'illumination et dont les lignes de balayage sont perpendiculaires à ladite intersection, et des moyens de traitement du signal vidéo émis par la caméra vidéo lorsque la pièce à analyser est éclairée par un plan d'illumination laser.

Un dispositif de ce type est connu par exemple de US-A-4188544.

De tels dispositifs de détection ou visualisation de traces de faisceaux laser à l'aide d'une caméra vidéo associée à un système informatique de traitement permettent difficilement d'obtenir des résultats de bonne qualité du fait des problèmes d'éclairage liés à l'utilisation d'un faisceau laser plan déterminant un trait au niveau de son intersection avec l'objet à analyser.

En effet, le faisceau laser plan est obtenu à l'aide d'une lentille semi-cylindrique à partir d'une source laser. La lentille engendre des faisceaux secondaires qui créent des traces parasites sur l'objet à analyser. Par ailleurs, l'intensité lumineuse du trait créé par le faisceau laser plan principal n'est pas uniforme dans le sens de la longueur du trait. La détection de la trace créée par le faisceau laser sur l'objet à analyser s'effectue à partir du signal vidéo émis par la caméra, à l'aide d'une technique de seuillage. Toutefois, selon les techniques de seuillage habituelles, on définit la position du trait laser en détectant pour chaque ligne l'instant de passage du front descendant de l'amplitude du signal vidéo à un niveau de seuil prédéterminé qui est le même pour toutes les lignes. Ceci conduit à une imprécision de mesure puisque le niveau du seuil adopté, ou le niveau du signal de luminance, a une interaction sur la position détectée du trait.

L'hétérogénéité de l'intensité du trait lumineux à détecter et la présence de traits secondaires conduisent à une instabilité du signal seuillé et la mise en oeuvre du dispositif de détection est délicate puisque notamment l'absorption du matériau contrôlé ainsi que l'ouverture du diaphragme ou la réponse de la caméra, qui jouent sur le niveau de luminance du signal vidéo, réagissent sur la position détectée du trait laser.

De tels inconvénients sont rédhibitoires pour un processus de contrôle dimensionnel au défilé et une technique de seuillage simple ne peut pas être utilisée de façon satisfaisante.

La présente invention vise à remédier aux inconvénients précités et à permettre de réaliser un dispositif de détection vidéo-laser à la fois souple d'emploi et apte à permettre une détection précise en temps réel à l'aide d'une caméra vidéo, de traces formées à partir d'un faisceau laser en vue de déterminer en temps réel et de façon précise les caractéristiques géométriques et dimensionnelles d'une pièce à analyser en mouvement en vue de déterminer son profil.

Ces buts sont atteints grâce à un dispositif du type défini en tête de la description, caractérisé en ce que les moyens de traitement du signal vidéo comprennent un circuit d'extraction de signaux de synchronisation ligne et trame, un convertisseur analogique-numérique, un dispositif d'extraction du point de luminance maximale par ligne et des circuits de calcul pour déterminer les caractéristiques de la pièce à analyser à partir des coordonnées des points de luminance maximale de chacune des lignes de signal vidéo.

De façon plus particulière, le dispositif d'extraction du point de luminance maximale par ligne comprend un pointeur de ligne-colonne, un circuit de seuil, un comparateur de valeurs numériques, une mémoire et des circuits logiques de traitement et le circuit de seuil, le comparateur, la mémoire et les circuits logiques de traitement sont reliés au circuit d'extraction de signaux de synchronisation, au convertisseur analogique-numérique et à la mémoire de coordonnées de point de luminance maximale.

Selon une caractéristique particulière, le dispositif comprend en outre un circuit générateur de signal de fixation de niveau de noir inclus dans le circuit d'extraction de signaux de synchronisation pour appliquer au convertisseur analogique-numérique ledit signal de fixation de niveau de noir.

Avantageusement, afin de permettre l'analyse dimensionnelle d'une pièce en vue de dessus et de dessous, le dispositif comprend des première et seconde sources laser situées respectivement au-dessus et au-dessous du plan de base pour diriger vers la pièce à analyser deux faisceaux de lumière selon deux plans d'illumination dont les intersections avec le plan de base sont confondues et perpendiculaires à ladite direction prédéterminée, et des première et seconde caméras vidéo matricielles dont les champs correspondent respectivement auxdits plans d'illumination et dont les lignes de balayage sont perpendiculaires auxdites intersections, et des moyens de multiplexage interposés entre les première et seconde caméras et les moyens de traitement des signaux vidéo émis par les caméras lorsque la pièce à analyser est éclairée par des plans d'illumination laser.

Selon une caractéristique préférentielle de l'invention, le dispositif d'extraction du point de luminance maximale par ligne est constitué par un processeur câblé travaillant en temps réel avec un décalage temporel inférieur à une ligne vidéo et le dispositif de détection vidéo laser comprend en outre au moins un processeur câblé de calcul de dimensions relié à la mémoire de coordonnées de point de luminance maximale.

D'autres caractéristiques et avantages de l'invention ressortiront de la description suivante de modes particuliers de réalisation de l'invention, donnés à titre d'exemple, en référence aux dessins annexés, sur lesquels :

– la figure 1 est une vue schématique en perspective montrant le principe d'analyse à partir d'une caméra vidéo, d'une pièce éclairée par un faisceau laser,

– la figure 2 est une vue schématique de l'image représentative de la pièce à analyser, obtenue à partir du signal émis par la caméra vidéo,

– les figures 3 et 4 sont des diagrammes montrant l'évolution de l'amplitude du signal vidéo en fonction du temps pour une ligne de balayage,

– la figure 5 est un schéma-bloc d'un circuit d'extraction du point de luminance maximale par ligne réalisé conformément à l'invention,

– la figure 6 est une vue schématique en perspective d'un exemple d'installation de détection vidéo-laser selon l'invention,

– la figure 7 est un schéma-bloc montrant la configuration d'ensemble des circuits d'un dispositif de détection vidéo-laser selon l'invention,

– la figure 8 est un schéma électronique d'un exemple particulier de réalisation d'un dispositif d'extraction du point de luminance maximale par ligne,

– les figures 9 et 10 représentent le schéma du signal de sortie du dispositif d'extraction du point de luminance maximale par ligne pour l'ensemble d'une image vidéo, avec l'indication des différents paramètres intervenant dans les calculs des dimensions de l'objet analysé, et

– la figure 11 est un organigramme montrant les différentes étapes mises en oeuvre dans le dispositif d'extraction du point de luminance maximale par ligne.

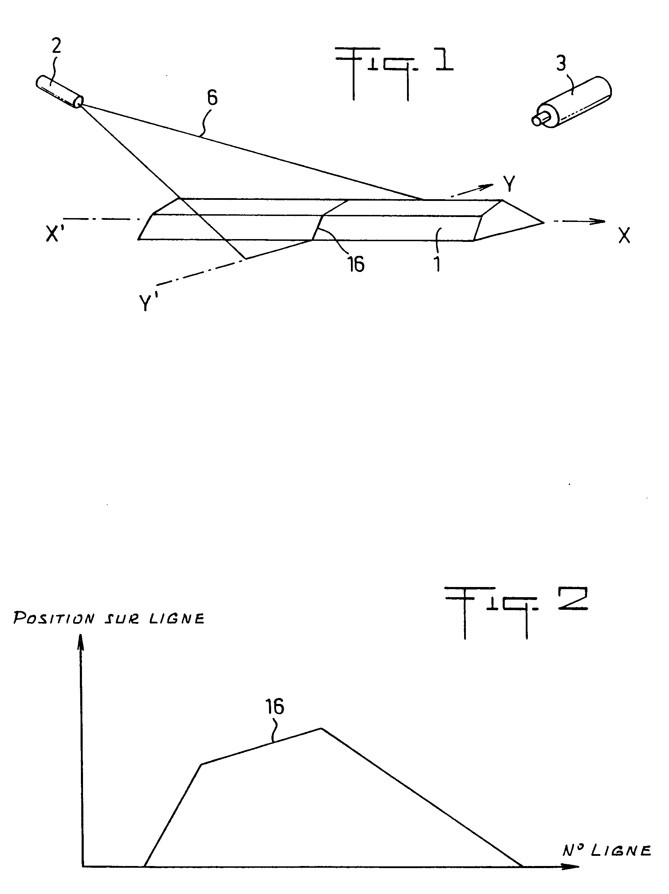

La figure 1 montre le principe d'analyse d'une pièce 1 dont les caractéristiques géométriques ou dimensionnelles sont à déterminer. Un faisceau plan 6 de lumière, créé à partir d'une source laser 2 associée à une lentille semi-cylindrique, non représentée sur le dessin, est émis de manière à être intercepté par la pièce 1, qui peut être par exemple une pièce de bois.

Selon une application préférentielle, la pièce 1 à analyser est mobile selon une direction prédéterminée X'X, qui peut être la direction longitudinale de la pièce 1 et, à un instant donné, le plan d'illumination laser 6 intercepte le plan de base sur lequel est placée la pièce 1 selon une direction Y'Y qui est perpendiculaire à la direction longitudinal X'X.

Dans ce cas, la trace 16 du faisceau laser 6 sur la pièce 1 permet de matérialiser le contour d'une section de cette pièce 1. La trace 16 est observée à l'aide d'une caméra vidéo matricielle 3 qui délivre un signal conforme aux normes CCIR.

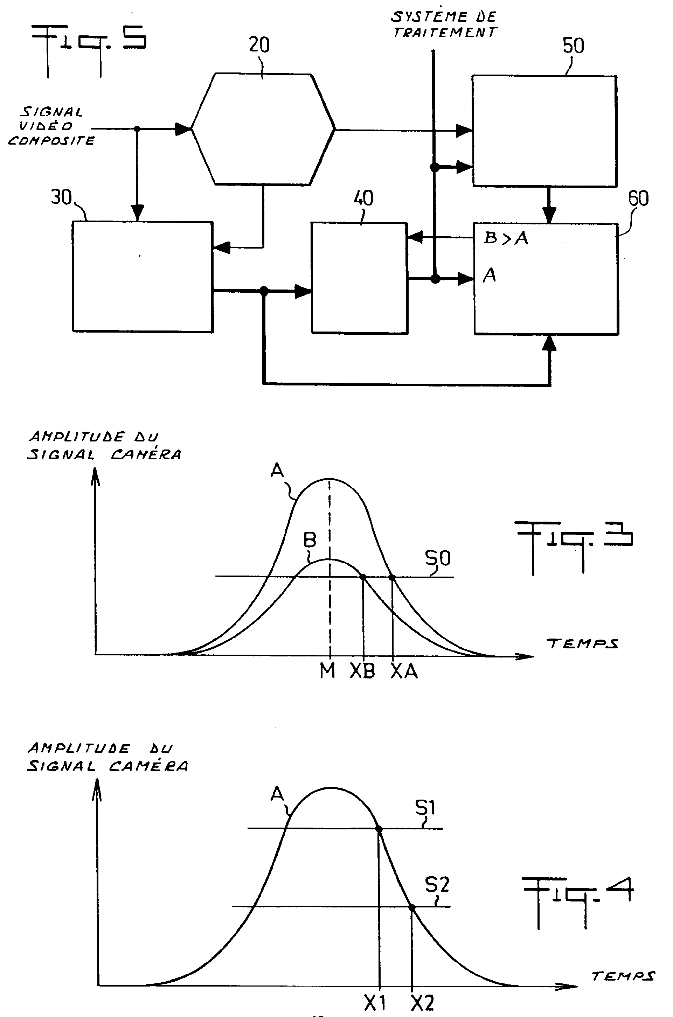

Ce signal vidéo à traiter est une fonction image du profil de la pièce appartenant au champ de la caméra. Comme cela est illustré dans l'exemple de la figure 2, la trace 16 du faisceau laser observée par la caméra 3 peut être reconstituée après traitement du signal vidéo dans la mesure où l'abscisse d'un point de la trace 16 correspond à un numéro de ligne de balayage de la caméra vidéo 3 tandis ue l'ordonnée de ce point correspond à la position de ce point sur la ligne concernée. Le traitement du signal vidéo est toutefois délicat du fait des variations de l'intensité lumineuse de la trace 16 du faisceau laser et de la présence de raies lumineuses parasites dans le champ de la caméra 3.

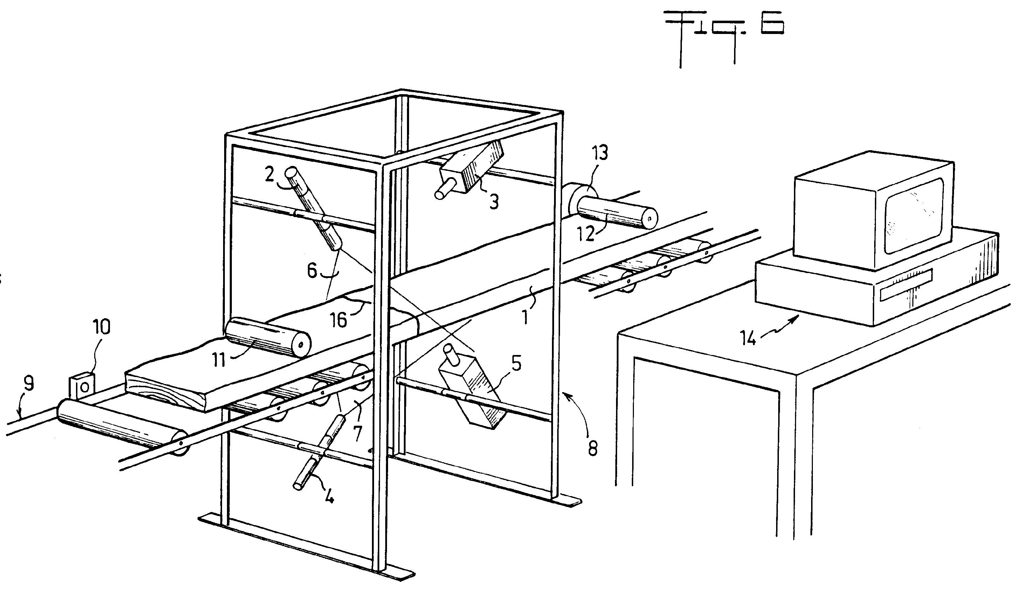

Ce problème sera exposé en référence aux figures 3 et 4. Sur la figure 3, on voit la courbe A représentant l'amplitude du signal vidéo fourni par la caméra, en fonction du temps, pour une ligne de balayage située dans une zone centrale du trait 16 fourni par la source laser 2. La courbe B de la figure 3 représente l'amplitude du signal vidéo fourni par la caméra en fonction du temps, pour une ligne de balayage correspondant à une zone d'extrémité du trait 16 fourni par la source laser 2. Afin de déterminer la position du trait laser 16 sur la ligne de balayage considérée, l'amplitude du signal vidéo est comparée à un seuil prédéterminé $S_o$. La position du trait est ainsi déterminée pour chaque ligne par la détection de l'instant X auquel le front descendant du signal franchit le seuil $S_o$. On peut constater sur la figure 3 que les deux signaux A et B d'amplitude différente dont le pic correspond à un même instant M, se traduisent après une opération de seuillage traditionnelle avec un seuil fixe $S_o$, par des abscisses différentes $X_A$ et $X_B$, ce qui conduit donc à une imprécision de mesure.

Indépendamment des variations de luminance du signal vidéo utile, le seuil choisi peut présenter des variations de niveau. Dans ce cas, (figure 4), la position du signal impulsionnel utile A sur une ligne vidéo, en fonction du temps, est déterminée de façon imprécise, deux seuils $S_1$ et $S_2$ de niveau différent définissant deux abcisses $X_1$ et $X_2$ différentes.

Par ailleurs, il n'est pas possible de modifier le seuil de façon simple pour chaque ligne de balayage de la caméra vidéo en vue de tenir compte de l'absence d'uniformité de l'intensité lumineuse du trait dans le sens de la longueur.

De plus, le fait que l'optique de la source laser engendre des traits parasites secondaires (d'intensité cependant moins grande que celle du trait principal) provoque, en combinaison avec l'hétérogénéité de l'intensité du trait une instabilité du signal seuillé.

On notera que l'absorption du matériau contrôlé, l'ouverture du diaphragme de la caméra 3 ou la réponse de la caméra 3 sont des facteurs qui jouent sur le niveau de luminance et par suite réagissent sur la position détectée du trait laser avec un dispositif classique de détection de trait utilisant une technique de comparaison avec un seuil simple.

Conformément à l'invention, on s'affranchit des inconvénients des méthodes classiques de détection de trait laser en n'utilisant plus comme principe de détection la simple comparaison du signal de luminance avec un seuil prédéterminé, mais en détectant pour chaque ligne du signal vidéo la valeur maximale du signal de luminance et en retenant comme coordonnées de la position du trait laser pour chaque ligne l'abscisse temporelle correspondant à cette valeur maximale du signal de luminance.

Compte tenu de l'application envisagée, qui est constituée par un processus de contrôle dimensionnel d'une pièce en défilement impliquant une détection en temps réel de la position du trait laser, de dispositif selon l'invention utilise un processeur câblé pour réaliser l'opération d'extraction du point de luminance maximale sur chaque ligne du signal vidéo.

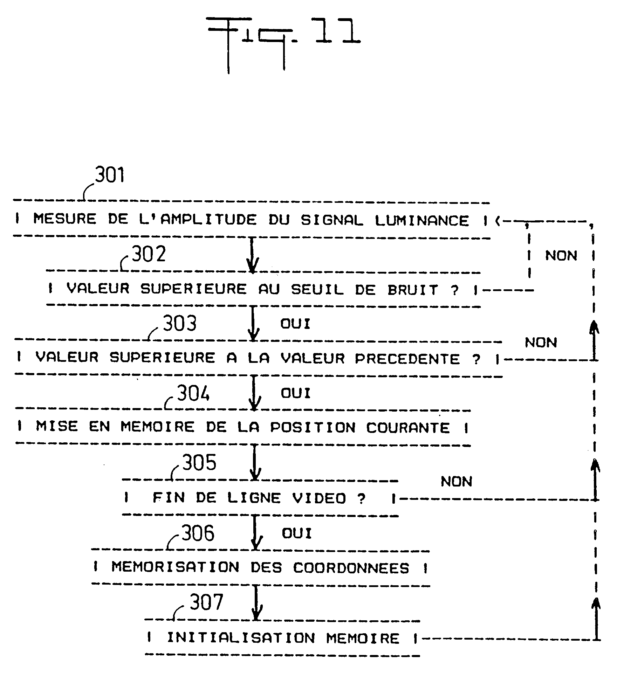

Les opérations effectuées par le processeur d'extraction de point laser selon l'invention sont indiquées dans l'ordinogramme de la figure 11.

La première étape 301 consiste en la mesure de l'amplitude du signal luminance fourni par la caméra 3. L'étape suivante 302 consiste à examiner si la valeur mesurée de l'amplitude du signal luminance est supérieure à un seuil de bruit prédéterminé. Si ce n'est pas le cas, il y a un retour à l'étape 301 précédente. Si au contraire, la valeur mesurée est supérieure au seuil de bruit, il y a passage à l'étape 303 au cours de laquelle il est examiné si la valeur en cours est supérieure à la valeur précédente. Si ce n'est pas le cas, il y a retour à l'étape initiale 301. En revanche, si l'on constate que la valeur en cours est supérieure à la valeur précédente, on procède au cours de l'étape 304 à la mise en mémoire de la valeur en cours correspondant à la position courante.

Un test 305 est ensuite effectué pour déterminer si l'on arrive ou non à la fin de la ligne vidéo. Si le résultat du test 305 est négatif, c'est-à-dire si l'on n'est pas encore arrivé à la fin de la ligne vidéo, le processeur revient à l'étape initiale 301 de mesure de l'amplitude du signal luminance. Si au contraire, le test 305 indique que l'on est arrivé à la fin de la ligne vidéo 305, le processeur procédé à la mémorisation des coordonnées du point de luminance maximale au cours de l'étape 306 puis passe à l'étape 307 d'initialisation de la mémoire avant de revenir à l'étape initiale 301 de mesure de l'amplitude du signal luminance pour la ligne vidéo suivante.

Le schéma-bloc du processeur d'extraction du point de luminance maximale sur une ligne vidéo est représenté sur la figure 5. Le signal vidéo composite d'entrée est appliqué à l'entrée d'un convertisseur analogique-numérique 30 pour fournir des valeurs numériques qui sont traitées de façon à ne mémoriser que la valeur la plus élevée sur une ligne. Un circuit 20 d'extraction de signal de synchronisation reçoit le signal vidéo composite d'entrée et permet au système de traitement de travailler en temps réel en synchronisation avec le balayage de la caméra. Les valeurs numériques délivrées par le convertisseur analogique-numérique 30 sont au préalable comparées à un seuil programmable défini par un circuit 50 et permettant d'éliminer le bruit. La comparaison entre d'une part le signal numérique correspondant à la valeur mesurée courante de l'amplitude du signal luminance et d'autre part le seuil fixé par le circuit 50 ou la valeur de luminance précédemment enregistrée dans une mémoire 40 est effectuée à l'aide d'un comparateur 60. Lorsque pour une même ligne vidéo, lors d'une comparaison à l'aide du comparateur 60, la valeur numérique B correspondant à la valeur mesurée courante de l'amplitude du signal luminance est supérieure à la valeur numérique A déjà présente dans la mémoire 40 la valeur B est substituée à la valeur A dans la mémoire 40.

Le processeur câblé dont la structure est représentée schématiquement sur la figure 5 travaille en temps réel avec un décalage temporel inférieur à une ligne vidéo.

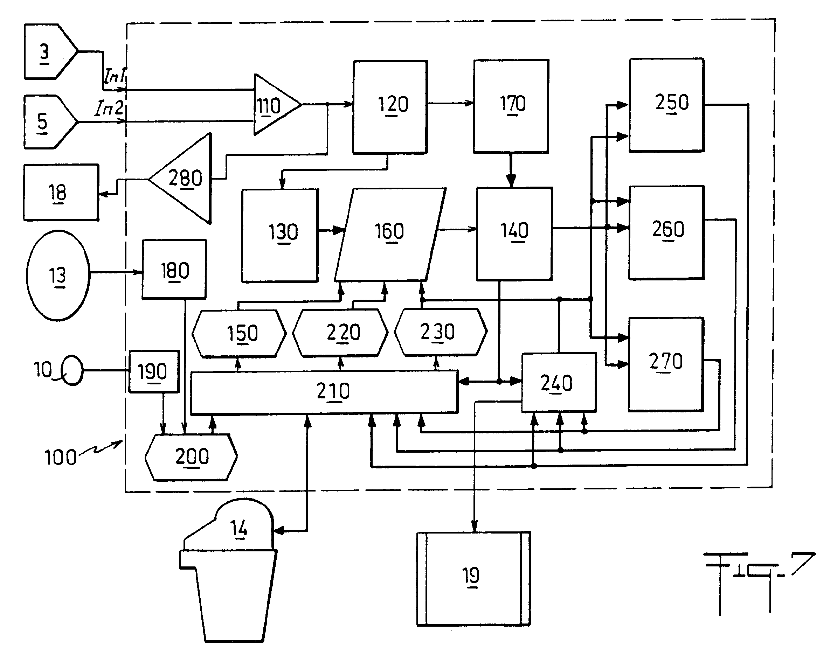

On décrira maintenant en référence aux figures 6 et 7 l'ensemble d'un dispositif de détection vidéo laser adapté à la détermination en temps réel de caractéristiques géométriques et dimensionnelles d'une pièce en défilement à analyser en vue de déterminer son profil.

La figure 6 concerne un exemple d'agencement mécanique des différents éléments et montre un bâti mécanosoudé 8 sur lequel sont montés, au-dessus du plan de défilement de la pièce 1 à analyser, une source laser 2 fournissant un plan d'illumination 6 définissant une trace laser 16 par son intersection avec la pièce à analyser 1 et une caméra vidéo 3 dans le champ de laquelle se situe la trace 16. D'une façon similaire, une source laser 4 fournissant un plan d'illumination 7 et une caméra vidéo 5 sont montées sur le bâti mécanosoudé 8 au-dessous du plan de défilement de la pièce 1 à analyser, pour observer le profil de la pièce 1 en vue de dessous. Les sources laser 2 et 4 sont placées de telle sorte que les intersections des plans d'illumination 6, 7 avec la pièce 1 ou le plan de base de la pièce 1 soient perpendiculaires à la direction longitudinale de la pièce 1 correspondant au sens de défilement de celle-ci.

Les moyens de support de la pièce à analyser 1 peuvent être constitués par exemple par un chemin de roulement 9 comprenant une structure horizontale fixe équipée de rouleaux transversaux de support montés de façon à pouvoir tourner librement autour de leurs axes. Avec un tel type de support, des espaces libres sont ménagés entre les rouleaux pour permettre le passage du faisceau inférieur 7 d'illumination laser, et l'observation par la caméra 5 de la trace laser formée sur la face inférieure de la pièce 1.

La pièce à analyser 1 peut être entraînée dans le sens longitudinal par des rouleaux presseurs 11, 12 dont l'un est muni d'un codeur de position 13 (codeur incrémental par exemple) permettant de repérer la position longitudinale de la section de la pièce 1 sur laquelle sont effectuées des mesures. Un capteur 10 de présence de pièce, tel qu'une cellule photoélectrique est également disposé au voisinage du support de base 9 supportant la pièce à analyser 1. Le dispositif 14 de traitement des signaux émis par les caméras vidéo 3 et 5 peut être situé à proximité du poste de réception des pièces à analyser 1 ou être délocalisé par rapport à ce poste.

La figure 7 donne le schéma synoptique général de l'ensemble des circuits de traitement 100 d'un dispositif de détection vidéo laser selon l'invention, qui comprend différents modules dont les fonctions seront décrites ci-dessous.

Un module de traitement du signal analogique est composé d'un multiplexeur 110, d'un étage séparateur 120 et d'un amplificateur de sortie 280.

Le multiplexeur 110 reçoit sur les entrées In1 et In2 les signaux vidéo composites délivrés par les caméras 3 et 5 et permet de choisir une caméra parmi les deux. Le multiplexeur 110 permet en outre l'adaptation des niveaux nécessaires à l'attaque de l'étage séparateur 120 ainsi que l'adaptation du niveau d'entrée du convertisseur analogique-numérique 130.

Le circuit séparateur 120 permet d'extraire du signal vidéo composite les signaux de synchronisation ligne et trame. Ce circuit 120 permet notamment le contrôle du balayage caméra et le cadencement de l'ensemble des fonctions de la carte électronique du capteur. Le circuit 120 aiguille le signal de luminance vers le convertisseur analogique-numérique 130, et permet également de délivrer un signal de fixation de niveau ou "clamping" pour l'amplificateur d'entrée du convertisseur 130, afin de pallier d'éventuelles fluctuations du niveau moyen du signal vidéo composite.

L'amplificateur de sortie 280 permet l'adaptation d'impédance et de niveau entre les circuits électroniques et un moniteur de contrôle 18.

Le module d'extraction du point laser de luminance maximale, dont la structure d'ensemble a déjà été décrite en référence à la figure 5 comprend essentiellement un circuit 160 d'extraction dont la fonction correspond pour l'essentiel à celle du circuit de comparaison 60 de la figure 5 associé à la mémoire 40. Ce module comprend en outre le convertisseur analogique-numérique 130, le circuit 150 d'application d'une valeur de seuil, un pointeur 170 de ligne et colonne, et une mémoire 140 de coordonnées du point laser permettant de mémoriser pour chaque ligne la paire de coordonnées du point de luminance maximale pour permettre ensuite une utilisation par le système de traitement et les processeurs câblés.

On notera que dans le module d'extraction, la valeur de seuil utilisée ne sert qu'à éliminer le bruit mais ne participe pas à la détermination des coordonnées du point de luminance maximale.

Un module de fenêtrage 230 est prévu pour limiter les calculs dans une fenêtre d'écran programmable. Un tel module permet notamment aux divers processeurs câblés spécialisés de ne pas être influencés par des zones indésirables de la pièce, ou encore, permet la mise en mémoire du profil d'une zone particulière.

Cette fenêtre est de forme rectangulaire. Elle est définie par une ligne supérieure, une ligne inférieure, une colonne gauche, une colonne droite.

Les calculs de largeur, d'épaisseur ou de section de la pièce analysée dont le profil est déterminé sont effectués à l'intérieur de la portion de champ définie par la fenêtre.

La gestion de la fenêtre est contrôlée par un processeur câblé, ce qui la rend transparente pour le système de traitement.

Les contours de la fenêtre peuvent être redéfinis à n'importe quel instant du processus.

Le dispositif de détection vidéo laser étant conçu pour analyser des pièces en mouvement, et devant incorporer un capteur 10 de présence de pièce ainsi qu'un codeur de position 13, les circuits de traitement 100 présentent des entrées pour les signaux issus du capteur 10 de présence de pièce et du codeur de position 13 et comprennent des circuits de filtrage et de mise en forme 190, 180 recevant respectivement les signaux appliqués sur ces entrées et délivrant en sortie des signaux filtrés à un compteur numérique 200, dont les résultats sont transmis au système informatique 14 par l'intermédiaire d'un module d'interface 210 qui permet la communication entre les différentes fonctions des circuits électroniques de traitement et le système informatique associé 14.

Un module supplémentaire 240 permet l'affichage, sur un moniteur couleur 19, des différents résultats issus des processeurs câblés 250, 260, 270. Ce module permet les réglages et les mises au point des différents sous-ensembles sans intervention dans la chaîne de calcul.

On décrira maintenant brièvement les fonctions des processeurs câblés 250, 260, 270, qui utilisent les coordonnées de chaque point laser enregistrées dans la mémoire 140 (qui sont constituées par la position du trait laser sur chaque ligne vidéo et le numéro de ligne correspondant) pour calculer en temps réel et sans intervention du système informatique, certaines caractéristiques dimensionnelles (section, largeur, épaisseur) de l'image vidéo. Le résultat de ces processeurs est mémorisé et est disponible pour le système de traitement par l'intermédiaire de l'interface 210 à la fin de chaque image.

Les applications industrielles montrent qu'en fait il est nécessaire de déterminer deux grandeurs dans le cas d'une détermination d'épaisseur, l'épaisseur maximale $E_1$ du produit ainsi que l'épaisseur minimale $E_2$ de ce produit (figure 9).

L'épaisseur de l'échantillon correspond ici à son encombrement dans le sens de la hauteur, c'est-à-dire dans le sens du balayage horizontal de la caméra.

Le processeur câblé d'épaisseur 270 a ainsi pour rôle la scrutation de toutes les coordonnées horizontales de la trace laser 16 dans la fenêtre 410 définie par le module 230 pour une image complète, et l'extraction de la valeur minimale $E_2$ et de la valeur maximale $E_1$ par rapport à une référence X.

D'une manière générale, la trace laser 16 utilisée par le système de traitement est constituée par l'ensemble des points issus du module d'extraction de luminance maximale, et dont les coordonnées sont envoyées au temps réel au système informatique.

Le champ caméra 400 représente la surface de la scène acquise par une caméra 3 ou 5.

La fenêtre 410 représente la partie du champ caméra 400 dans laquelle doit se trouver le profil intervenant dans les calculs.

La référence X fournie au circuit 160 par le bloc 220 relié à l'interface 210 représente le zéro à partir duquel les calculs des coordonnées du trait laser 16 sont effectués, dans le sens horizontal de balayage. Cette valeur est programmable et peut être par exemple ajustée à la valeur du zéro mécanique de l'installation. La référence Y représente le zéro à partir duquel les calculs des coordonnées du trait laser 16 sont effectués dans le sens vertical de balayage. Cette valeur correspond à la première ligne vidéo utile du champ de la caméra 400, et n'est pas programmable.

Le processeur câblé de largeur 260 vise à déterminer la grandeur L de la pièce à analyser qui est prise dans le sens de l'encombrement maximal dans le sens transversal au déplacement de ladite pièce.

Il s'agit donc de calculer la valeur maximale correspondant à la dimension de l'échantillon à analyser dans le sens du balayage vertical de la caméra.

Ce calcul est effectué par un processeur câblé 260, à l'intérieur de la fenêtre programmée 410 définie par le bloc 230, avec l'exécution du processus suivant :

– Acquisition du numéro de ligne correspondant au premier flanc de l'échantillon.
– Acquisition du numéro de ligne correspondant au dernier flanc de l'échantillon.
– Calcul de la différence.
– Mise en mémoire du résultat.

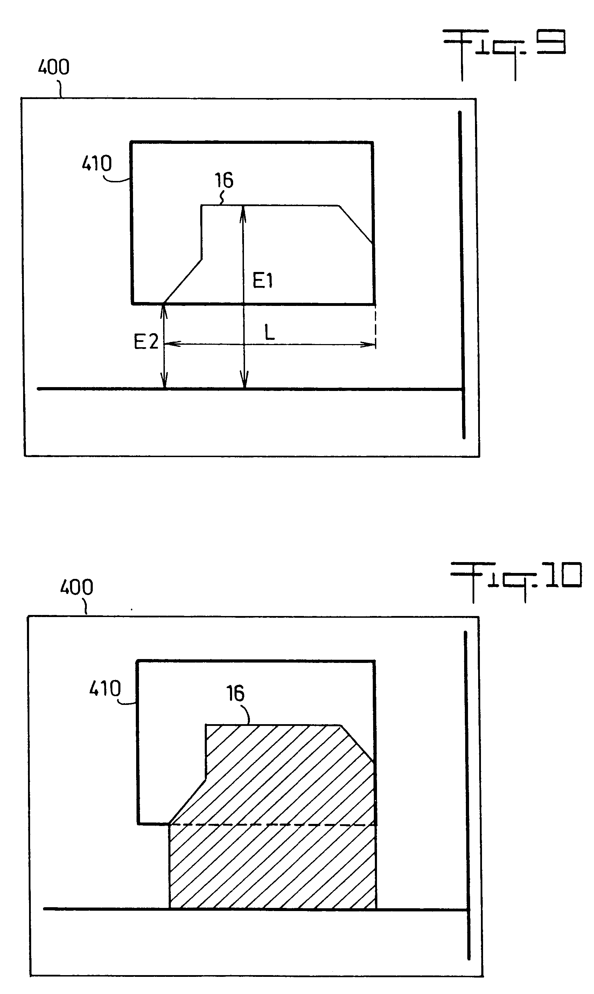

Le processeur de section 250 vise à déterminer l'aire délimitée par le faisceau laser 16 sur l'échantillon observé (surface hachurée de la figure 10).

$$S = \sum_{p=1}^{n} [X(p) - X(p-1)] * f(Xp)$$

Avec :

p = numéro de ligne
n = nombre de lignes par image
X(p)-X(p-1) = résolution sur la ligne
f(Xp)= position du point laser sur la ligne p

Ce calcul est effectué par le processeur câblé 250 et est mémorisé à la fin de chaque image.

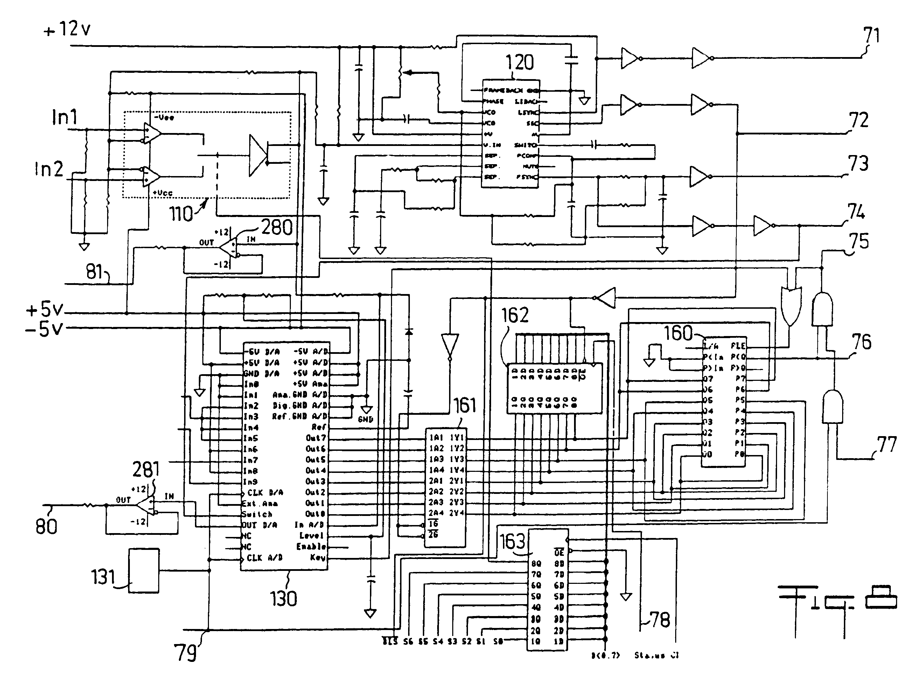

On décrira maintenant à titre d'exemple en référence à la figure 8 des circuits de traitement pouvant être utilisés en tant qu'étage d'entrée (module de traitement du signal analogique et circuit séparateur) et en tant que module d'extraction de point de luminance maximale, dans un dispositif de détection vidéo laser selon l'invention.

Sur la figure 8, les caméras 3 et 5 sont connectées sur les entrées In1 et In2 qui sont des entrées 75 ohms.

Les signaux vidéo issus des caméras 3 et 5 sont alors appliqués à un circuit intégré 110 dont le rôle est d'assurer le multiplexage des caméras 3 et 5, et d'adapter le signal analogique aux entrées du circuit d'extraction de synchronisation 120 et du convertisseur analogique-numérique 130.

Le circuit 120 d'extraction de synchronisation permet d'effectuer à partir du signal composite CCIR la séparation des signaux de synchronisation de ligne, délivrés sur une sortie 71, et la séparation des signaux de synchronisation de trame délivrés sur une sortie 73. Le circuit 120 engendre également un signal de fixation de niveau de noir délivré sur une sortie 72.

Le signal de luminance issu du multiplexeur 110 est lui-même dirigé vers l'entrée analogique In A/D d'un circuit 130 qui comprend d'une part un convertisseur analogique-numérique et d'autre part un convertisseur numérique-analogique.

Le convertisseur analogique-numérique du circuit 130 possède une entrée "Key" de fixation de niveau qui est pilotée par le signal de fixation de niveau issu de l'extracteur de synchronisations 120 et présent sur la borne de sortie 72.

Les valeurs numériques issues du convertisseur analogique-numérique et fournies par les sorties "Out 0" à "Out 7" sont acheminées vers des circuits 161, 160 constituant un comparateur qui, grâce à la logique annexe, permet la mise en mémoire de la valeur la plus élevée des valeurs numériques. La mémoire 162, 163 du comparateur est initialisée en début de chaque ligne vidéo avec la valeur de seuil.

Le signal délivré sur la sortie 75 est un signal de validation qui permet la mise en mémoire des coordonnées du point laser. La sortie 76 permet de connaître les coordonnées du point laser présent dans tout le champ des caméras qui pour chaque ligne présente la luminosité maximale. La borne 77 est prévue pour recevoir un signal de définition d'une fenêtre à l'intérieur du champ total observé.

La borne 78 est prévue pour l'application d'une impulsion d'horloge lors de la fixation d'un seuil.

Un oscillateur 131 par exemple à 10 MHz assure le cadencement des différents circuits et fournit les impulsions d'horloge nécessaires sur la ligne 79.

Les signaux analogiques issus du multiplexeur 110 sont appliqués en outre à un amplificateur de sortie 280 et à une borne de sortie 81 reliée à un moniteur de contrôle.

La partie du circuit 130 qui constitue un convertisseur numérique-analogique peut également être utilisée pour recréer un signal vidéo composite appliqué par un amplificateur de sortie 281 et une borne de sortie 80 à un second moniteur de contrôle.

Un signal de synchronisation dérivé du signal de synchronisation de trame élaboré par le circuit extracteur de synchronisation 120 est disponible sur une borne de sortie 74 et est appliqué au circuit 130.

Divers composants (résistances, condensateurs, portes logiques) représentés sur le schéma de la figure 8 sont associés aux circuits intégrés énoncés ci-dessus et ne seront pas décrits de façon plus détaillée.

**Revendications**

1. Dispositif de détection vidéo-laser pour la détermination en temps réel de caractéristiques géométriques et dimensionnelles d'une pièce à analyser en vue de déterminer son profil, comprenant des moyens (8,9) de support, sur un plan de base, de la pièce à analyser (1), des moyens (11,12) de transport de la pièce à analyser (1) selon une direction prédéterminée, au moins une source laser (2,4) pour diriger vers la pièce à analyser (1) un faisceau de lumière selon un plan d'illumination (6,7) dont l'intersection avec le plan de base est perpendiculaire à ladite direction prédéterminée, au moins une caméra vidéo matricielle (3,5) dont le champ correspond audit plan d'illumination (6,7) et dont les lignes de balayage sont perpendiculaires à ladite intersection, et des moyens de traitement du signal vidéo émis par la caméra vidéo (3,5) lorsque la pièce à analyser est éclairée par un plan d'illumination laser (6,7),
caractérisé en ce que les moyens de traitement du signal vidéo comprennent un circuit (20;120) d'extraction de signaux de synchronisation ligne et trame, un convertisseur analogique-numérique (30; 130), un dispositif d'extraction du point de luminance maximale par ligne et des circuits de calcul pour déterminer les caractéristiques de la pièce à analyser (1) à partir des coordonnées des points de luminance maximale de chacune des lignes de signal vidéo.

2. Dispositif selon la revendication 1, caractérisé en ce que le dispositif d'extraction du point de luminance maximale par ligne comprend un pointeur de ligne-colonne (170), un circuit de seuil (50;150), un comparateur de valeurs numériques (60;160), une mémoire (40,160) et des circuits logiques de traitement et en ce que le circuit de seuil (50;150), le comparateur (60;160), la mémoire (40,160) et les circuits logiques de traitement sont reliés au circuit d'extraction de signaux de synchronisation, au convertisseur analogique-numérique (30;130) et à la mémoire (140) de coordonnées de point de luminance maximale.

3. Dispositif selon la revendication 1 ou la revendication 2, caractérisé en ce qu'il comprend en outre un

7

circuit générateur de signal de fixation de niveau de noir inclus dans le circuit d'extraction de signaux de synchronisation (20;120) pour appliquer au convertisseur analogique-numérique (30;130) ledit signal de fixation de niveau de noir.

4. Dispositif selon l'une quelconque des revendications 1 à 3, caractérisé en ce qu'il comprend des première et seconde sources laser (2,4) situées respectivement au-dessus et au-dessous du plan de base pour diriger vers la pièce à analyser (1) deux faisceaux de lumière selon deux plans d'illumination (6,7) dont les intersections avec le plan des base sont confondues et perpendiculaires à ladite direction prédéterminée, et des première et seconde caméras vidéo matricielles (3,5) dont les champs correspondent respectivement auxdits plans d'illumination (6,7) et dont les lignes de balayage sont perpendiculaires auxdites intersections, et des moyens (110) de multiplexage interposés entre les première et seconde caméras (3,5) et les moyens de traitement des signaux vidéo émis par les caméras lorsque la pièce à analyser (1) est éclairée par des plans d'illumination laser (6,7).

5. Dispositif selon l'une quelconque des revendications 1 à 4, caractérisé en ce que le dispositif d'extraction du point de luminance maximale par ligne est constitué par un processeur câblé travaillant en temps réel avec un décalage temporel inférieur à une ligne vidéo.

6. Dispositif selon l'une quelconque des revendications 1 à 5, caractérisé en ce qu'il comprend en outre au moins un processeur câblé (250, 260, 270) de calcul de dimensions relié à la mémoire de coordonnées de point de luminance maximale.

7. Dispositif selon la revendication 6, caractérisé en ce qu'il comprend un processeur câblé (250) de section pour déterminer l'aire délimitée par le faisceau laser sur l'échantillon observé (1), la mesure de cette section s'effectuant par intégration du contour que représente le profil, et une mémoire pour enregistrer la mesure de la section à la fin de chaque image.

8. Dispositif selon la revendication 6 ou la revendication 7, caractérisé en ce qu'il comprend un module de fenêtrage (230) géré par un processeur câblé pour assurer la limitation de calculs dans une fenêtre d'écran programmable.

9. Dispositif selon la revendication 8, caractérisé en ce qu'il comprend un processeur câblé (260) de largeur pour calculer à l'intérieur d'une fenêtre programmée la valeur maximale correspondant à la dimension de l'échantillon (1) dans le sens du balayage vertical de la caméra.

10. Dispositif selon la revendication 8, caractérisé en ce qu'il comprend un processeur câblé d'épaisseur (270) pour calculer à l'intérieur d'une fenêtre programmée l'encombrement de l'échantillon à analyser dans le sens du balayage horizontal de la caméra.

11. Dispositif selon l'une quelconque des revendications 1 à 10, caractérisé en ce qu'il comprend un capteur (10) de présence de pièce, un codeur (13) de position de pièce dans le sens longitudinal selon ladite direction prédéterminée, et des moyens de filtrage (180, 190) des signaux délivrés par ledit capteur (10) et ledit codeur (13).

## Claims

1. Video laser detection device for determining in real time the geometric and dimensional characteristics of a workpiece to be analyzed with a view to determining its profile, comprising support means (8,9), for supporting on a base plane the workpiece to be analyzed (1), conveying means (11,12) for conveying the workpiece to be analyzed (1) according to a predetermined direction, at least one laser source (2,4) for directing a light beam toward the workpiece to be analyzed (1) according to a plane of light (6,7) whose intersection with the base plane is perpendicular to said predetermined direction, at least one matrix video camera (3,5) whose field corresponds to said plane of light (6,7) and whose scanning lines are perpendicular to said intersection, and means for processing the video signal generated by the television camera (3,5) when the workpiece to be analyzed is illuminated by a laser plane of light (6,7), characterized in that the means for processing the video signal comprise a circuit (20,120) for extracting line and frame sync signals, an analog-to-digital converter (30,130), a device for extracting the point of light having the maximum brightness per line and computational circuits for determining the characteristics of the workpiece to be analyzed (1) from coordinates of the points of light having the maximum brightness in each one of the video signal lines.

2. Device according to claim 1, characterized in that said device for extracting the point of light having the maximum brightness per line comprises a line-column pointer (170), a threshold circuit (50,150), a numerical value comparator (60,160), a memory (40,160) and processing logic circuits and in that the threshold circuit (50,150), the comparator (60,160), the memory (40,160) and the processing logic circuits are connected to the circuit for extracting sync signals, to the analog-to-digital converter (30,130), and to the memory (140) of coordinates of the points of light having the maximum brightness.

3. Device according to claim 1 or claim 2, characterized in that it further comprises, inside the circuit for extracting the sync signals (20,120), a circuit for generating signals for fixing the black level in order to apply said signal for fixing the black level to the analog-to-digital converter (30,130).

4. Device according to any one of claims 1 to 3, characterized in that it comprises first and second laser sources (2,4) located respectively above and beneath the base plane to direct two light beams toward the workpiece to be analyzed according to two planes of light (6,7) whose intersections with the base plan are identical and perpendicular to said predetermined direction, and first and second matrix video cameras (3,5) whose fields correspond respectively to said planes of light (6,7) and whose scanning lines are perpendicular to said intersections, and multiplexing means (110) interposed between the first and second cameras (3,5) and means for processing video signals generated by the cameras when the piece to be analyzed is illuminated by laser planes of light (6,7).

5. Device according to any one of claims 1 to 4, characterized in that the device for extracting the point of light having the maximum brightness per line is constituted by a wired processor operating in real time with a time lapse less than a video line

6. Device according to any one of claims 1 to 5, characterized in that it further comprises at least one wired processor (250,260,270) for calculating dimensions, said processor being connected to the memory of coordinates of the points of light having the maximum brightness.

7. Device according to claim 6, characterized in that it comprises a wired section processor (250) for determining the area defined by the laser beam on the observed sample (1), the measurement of this section being carried out by integrating the surface contour represented by the profile, and a memory for storing the measurement of the section upon completion of each image.

8. Device according to claim 6 or claim 7, characterized in that it comprises a windowing module (230) managed by a wired processor in order to ensure the limitation of computations in a programmable screen window.

9. Device according to claim 8, characterized in that it comprises a wired width processor (260) for calculating inside a programmed window the maximum value corresponding to the dimension of the sample (1) in the direction of the vertical scanning of the camera.

10. Device according to claim 8, characterized in that it comprises a wired thickness processor (270) for calculating inside a programmed window the overall dimension of the sample to be analyzed in the direction of horizontal scanning of the camera

11. Device according to any one of claims 1 to 10, characterized in that it comprises a sensor (10) for sensing the presence of a workpiece, a workpiece position encoder (13) in the longitudinal direction according to said predetermined direction, and means (180,190) for filtering signals generated by said sensor (10) and said encoder (13).


## Patentansprüche

1. Videolaserdetektionseinrichtung zur Bestimmung geometrischer und dimensioneller Charakteristika eines zwecks Profilbestimmung abzutastenden Stücks in der Echtzeit, umfassend Mittel (8, 9) zur Auflage des abzutastenden Stücks (1) auf einer Basisebene, Mittel (11, 12) zum Transportieren des abzutastenden Stücks (1) in einer vorbestimmten Richtung, mindestens eine Läserquelle (2, 4) zum Richten eines Lichtbündels auf das abzutastende Stück (1) in einer Anstrahlebene (6, 7), deren Schnittstelle mit der Basisebene senkrecht zu besagter vorbestimmter Richtung liegt, mindestens eine Matrixvideokamera (3, 5), deren Feld der Anstrahlebene (6, 7) entspricht und deren Abtastzeilen senkrecht zu besagter Schnittstelle stehen, und Mittel zur Verarbeitung des von der Videokamera (3, 5) emittierten Videosignals, wenn das abzutastende Stück durch eine Laseranstrahlebene (6, 7) angestrahlt ist, dadurch gekennzeichnet, daß die Mittel zur Verarbeitung des Videosignals einen Schaltkreis (20; 120) zur Extraktion von Synchronisationssignalen Zeile und Raster, einen Analog/Digital-Wandler (30; 130), eine Einrichtung zur Extraktion des maximalen Leuchtdichtepunktes pro Zeile und Rechenkreise zur Bestimmung der Charakteristika des abzutastenden Stücks (1) aus den Koordinaten der maximalen Leuchtdichtepunkte jeder Zeile des Videosignals umfaßt.

2. Vorrichtung nach Anspruch 1, dadurch gekennzeichnet, daß die Einrichtung zur Extraktion des maximalen Leuchtdichtepunktes pro Zeile einen Zeilen-Spalte-Anpeiler (170), eine Schwellenschaltung (50; 150), einen Digitalwertkomparator (60; 160), einen Speicher (40, 160) und logische Verarbeitungskreise umfaßt, und daß die Schwellenschaltung (50; 150), der Komparator (60; 160), der Speicher (40, 160) und die logischen Verarbeitungskreise an den Schaltkreis zur Extraktion von Synchronisationssignalen, den Analog/Digital-Wandler (30; 130) und den Speicher (140) der Koordinaten des maximalen Leuchtdichtepunktes angeschlossen sind.

3. Vorrichtung nach Anspruch 1 oder 2, dadurch gekennzeichnet, daß sie weiters einen im Schaltkreis zur Extraktion von Synchronisationssignalen (20; 120) enthaltenen Generatorkreis für ein Schwarzwertfestlegungssignal zwecks Aufdrückens des Schwarzwertfestlegungssignals auf den Analog/Digital-Wandler (30; 130) umfaßt.

4. Vorrichtung nach einem der Ansprüche 1 bis 3, dadurch gekennzeichnet, daß sie eine erste und eine zweite Laserquelle (2, 4), die zum Richten zweier Lichtbündeln auf das abzutastende Stück (1) entlang zweier Anstrahlebenen (6, 7), deren Schnittstellen mit der Basisebene zusammenfallen und senkrecht zu besagter Richtung liegen, oberhalb bzw. unterhalb der Basisebene angeordnet sind, eine erste und eine zweite Matrixvideokamera (3, 5), deren Felder jeweils einer Anstrahlebene (6, 7) entsprechen und deren Abtastzeilen senkrecht zu den Schnittstellen verlaufen, und Multiplexermittel (110), die zwischen der ersten und der zweiten Kamera (3, 5) und den Mitteln zur Verarbeitung der von den Kameras emittierten Videosignale, wenn das abzutastende Stück (1) über die Laseranstrahlebenen (6, 7) angestrahlt ist, angeordnet sind, umfaßt.

5. Vorrichtung nach einem der Ansprüche 1 bis 4, dadurch gekennzeichnet, daß die Einrichtung zur Extraktion des maximalen Leuchtdichtepunktes pro Zeile aus einem verkabelten Prozessor besteht, der in der Echtzeit mit einer zeitlichen Verschiebung geringer als eine Videozeile arbeitet.

6. Vorrichtung nach einem der Ansprüche 1 bis 5, dadurch gekennzeichnet, daß sie weiters mindestens einen verkabelten Dimensionsrechenprozessor (250, 260, 270) umfaßt, der an den Speicher der Koordinaten des maximalen Leuchtdichte-punktes angeschlossen ist.

7. Vorrichtung nach Anspruch 6, dadurch gekennzeichnet, daß sie einen verkabelten Segmentprozessor (250) zur Ermittlung der vom Laserbündel auf dem beobachteten Musterstück (1) umgrenzten Fläche umfaßt, wobei die Messung dieses Segments durch Integration der vom Profil aufgewiesenen Außenlinie erfolgt, und einen Speicher zum Speichern des Abmaßes des Segments am Ende jedes Bildes umfaßt.

8. Vorrichtung nach Anspruch 6 oder 7, dadurch gekennzeichnet, daß sie einen Befensterungsmodul (230), gestützt durch einen verkabelten Prozessor, zur Sicherung der Begrenzung von Berechnungen in einem programmierbaren Anzeigefenster umfaßt.

9. Vorrichtung nach Anspruch 8, dadurch gekennzeichnet, daß sie einen verkabelten Breiteprozessor (260) zum Berechnen des der Abmessung des Musterstücks (1) in Richtung der Vertikalabtastung der Kamera entsprechenden Maximalwerts innerhalb eines progammierten Fensters umfaßt.

10. Vorrichtung nach Anspruch 8, dadurch gekennzeichnet, daß sie einen verkabelten Dickenprozessor (270) zum Berechnen der Hauptabmessungen des abzutastenden Musterstücks in Richtung der Horizontalabtastung der Kamera innerhalb eines progammierten Fensters umfaßt.

11. Vorrichtung nach einem der Ansprüche 1 bis 10, dadurch gekennzeichnet, daß sie einen Stückanwesenheitssensor (10), einen Stückpositionskodierer (13) in Längsrichtung gemäß einer vorbestimmten Richtung und Filtereinrichtungen (180, 190) für die vom Sensor (10) und vom Kodierer (13) entsendeten Signale umfaßt.

Fig. 1

Fig. 2

POSITION SUR LIGNE

16

N° LIGNE

Fig.5

SIGNAL
VIDÉO
COMPOSITE

SYSTÈME DE
TRAITEMENT

20

50

30

40

60

B > A

A

AMPLITUDE DU
SIGNAL CAMÉRA

A

B

S0

Fig.3

TEMPS

M  XB  XA

AMPLITUDE DU
SIGNAL CAMÉRA

A

S1

S2

Fig.4

TEMPS

X1  X2

12

Fig. 6

EP 0 320 391 B1

FIG-7

+12v

In1

In2

-Vee

+Vcc

110

280
+12
OUT        IN
-12

81

+5v
-5v

281
+12
OUT        IN
-12

80

131

79

120

130
-6V D/A        -5V A/D
+5V D/A        +5V A/D
GND D/A        +5V A/D
In0            +5V Ana
In1            Ana.GND A/D
In2            Dig.GND A/D
In3            Ref.GND A/D
In4            Ref
In5            Out7
In6            Out6
In7            Out5
In8            Out4
In9            Out3
CLK B/A        Out2
Ext.Ana        Out1
Switch         Out0
OUT D/A        In A/D
NC             Level
NC             Enable
CLK A/B        Key

FRAMEBACK GND
PHASE          LDAC
VCO            LSYNC
VCO            SSC
5V
V.IN           SWITO
REF            PCOMP
REF            MUTE
REF            FSYNC

71

72

73

74

75

76

77

78

161
1A1  1Y1
1A2  1Y2
1A3  1Y3
1A4  1Y4
2A1  2Y1
2A2  2Y2
2A3  2Y3
2A4  2Y4
1G
2G

162

163
OE
8Q  8D
7Q  7D
6Q  6D
5Q  5D
4Q  4D
3Q  3D
2Q  2D
1Q  1D

S7  S6  S5  S4  S3  S2  S1  S0

160
L/H  FLE
P<In  P<O
P>In  P>O
O7  P7
O6  P6
O5  P5
O4  P4
O3  P3
O2  P2
O1  P1
O0  P0

GND

Fig. 8

Fig.9

400

410

16

E1

E2

L

Fig.10

400

410

16

# Fig. 11

```
        301
  ┌──────────────────────────────────────────┐
  │ MESURE DE L'AMPLITUDE DU SIGNAL LUMINANCE │ <──┬────┐
  └──────────────────────────────────────────┘    │    │
        302               │                        │  NON │
  ┌───────────────────────▼──────────────────┐    │    │
  │   VALEUR SUPERIEURE AU SEUIL DE BRUIT ?   │────┘    │
  └──────────────────────────────────────────┘         │
        303        │  OUI                       NON     │
  ┌────────────────▼─────────────────────────────┐     ▲
  │ VALEUR SUPERIEURE A LA VALEUR PRECEDENTE ?    │─────┘
  └───────────────────────────────────────────────┘    │
        304        │  OUI                               │
  ┌────────────────▼─────────────────────────┐          │
  │ MISE EN MEMOIRE DE LA POSITION COURANTE   │          │
  └──────────────────────────────────────────┘          │
        305        │                     NON            ▲
  ┌────────────────▼─────────────────┐                  │
  │      FIN DE LIGNE VIDEO ?         │──────────────────┘
  └──────────────────────────────────┘                  │
        306        │  OUI                                │
  ┌────────────────▼─────────────────┐                  │
  │   MEMORISATION DES COORDONNEES    │                  │
  └──────────────────────────────────┘                  │
        307        │                                     ▲
  ┌────────────────▼─────────────────┐                  │
  │      INITIALISATION MEMOIRE       │──────────────────┘
  └──────────────────────────────────┘
```